(19) Europäisches Patentamt / European Patent Office / Office européen des brevets

(11) **EP 3 077 858 B1**

(12) **EUROPÄISCHE PATENTSCHRIFT**

(45) Veröffentlichungstag und Bekanntmachung des Hinweises auf die Patenterteilung:
**21.02.2024   Patentblatt 2024/08**

(21) Anmeldenummer: **14811771.6**

(22) Anmeldetag: **04.12.2014**

(51) Internationale Patentklassifikation (IPC):
**G02B 5/30** (2006.01)

(52) Gemeinsame Patentklassifikation (CPC):
**G02B 5/3075; G02B 5/3041**

(86) Internationale Anmeldenummer:
**PCT/EP2014/003233**

(87) Internationale Veröffentlichungsnummer:
**WO 2015/082070 (11.06.2015 Gazette 2015/23)**

(54) **POLARISATIONSSYSTEM**

POLARIZATION SYSTEM

SYSTÈME DE POLARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2013   DE 102013020353**

(43) Veröffentlichungstag der Anmeldung:
**12.10.2016   Patentblatt 2016/41**

(73) Patentinhaber: **JENOPTIK Optical Systems GmbH 07745 Jena (DE)**

(72) Erfinder:
• **BERNITZKI, Helmut 07745 Jena (DE)**
• **KLAUS, Michael 07743 Jena (DE)**
• **LAUX, Sven 06317 Seegebiet Mansfelder Land (DE)**
• **SCHUHMANN, Uwe 07743 Jena (DE)**

(74) Vertreter: **Waldauf, Alexander Jenoptik AG Carl-Zeiß-Straße 1 07743 Jena (DE)**

(56) Entgegenhaltungen:
**EP-A2- 1 306 665        WO-A1-2005/114266
WO-A1-2010/034367    DE-A1-102010 017 106
US-A1- 2006 050 370**

**Beschreibung**

Die vorliegende Erfindung bezieht sich auf ein Polarisationssystem gemäß den Merkmalen des Patentanspruches 1.

Die Photolithographie ist eine der zentralen Methoden der Halbleiter- und Mikrosystemtechnik zur Herstellung von integrierten Schaltungen und weiteren Produkten. Dabei beleuchtet eine Lichtquelle, beispielsweise eine Laserquelle, über eine Beleuchtungsoptik eine Maske, deren Bild mit Hilfe einer Projektionsoptik auf einen mit Fotolack beschichteten Halbleiterwafer abgebildet wird. Das Auflösungsvermögen, das heißt die Fähigkeit des optischen Systems, die kleinsten Strukturen in den Fotolack abzubilden, wird im Wesentlichen von der verwendeten Lichtwellenlänge und der Fähigkeit des Systems, genug Beugungsordnungen der Maske einzufangen, bestimmt. Sie lässt sich näherungsweise beschreiben durch:

$$CD=k1*(\lambda/NA)$$

hierbei ist CD die kritische Abmessung, das heißt die kleinste abbildbare Linienbreite (oft auch mit den englischen Begriffen minimum feature size oder critical dimension bezeichnet), k1 ein vom Abbildungs- und Lacksystem abhängiger Faktor, λ die Wellenlänge des genutzten Lichts und NA die numerische Apertur der letzten Linse vor dem Wafer.

Neben der Entwicklung der Belichtungstechnik und der Verwendung von immer kleineren Wellenlängen bis in den tiefen UV-Bereich (inkl. Verbesserung der numerischen Apertur) wurden zahlreiche weitere Techniken zur Verbesserung des Prozessfensters durch die Verringerung das k1-Werts entwickelt und eingeführt. Neben Verbesserungen der Fotolacke sind dies vor allem sogenannte auflösungsverbessernde Techniken. Dazu zählen Techniken zur Optimierung der Belichtung, wie Schrägbeleuchtung (engl. off-axis illumination, OAI) oder die Belichtung mit polarisiertem Licht.

Systeme zur Herstellung von polarisiertem Licht sind aus dem Stand der Technik hinlänglich bekannt. Beispielsweise kann es sich um gekittete Systeme handeln, bei denen Kristalle verschiedener Orientierungsrichtungen aneinandergefügt werden. Derartige Systeme können jedoch im UV-Bereich nicht eingesetzt werden, da die kurzwellige Strahlung das Fügematerial beschädigen oder gar zerstören würde. Ferner sind auch Substrate mit aufgedampften Schichten bekannt, durch die das Licht in eine das Substrat transmittierte und polarisierte Komponente und einer an der Schicht reflektierte und polarisierte Komponente zerlegt wird. Die im Stand der Technik oftmals verwendete transmittierte und polarisierte Komponente wird jedoch bei kurzen Wellenlängen mit hohen Verlusten übertragen, so dass ein Einsatz im UV Bereich ebenfalls nur sehr schwer möglich ist.

Die US 2006/0050370 zeigt ein Polarisationssystem für einen Wellenlängenbereich, der kleiner als 250 nm ist.

Es ist daher Aufgabe der vorliegenden Erfindung, ein verbessertes Polarisationssystem zur Verfügung zu stellen, das eine anfangs unpolarisierte Strahlung in eine polarisierte Strahlung verwandelt, wobei die Energiedichte beim Durchgang durch das Polarisationssystem annähernd erhalten bleibt. Diese Aufgabe wird durch ein Polarisationssystem gemäß den Merkmalen des Patentanspruchs 1 gelöst. Vorteilhafte Ausführungsformen sind Gegenstand der weiteren Unteransprüche.

In einem Grundgedanken der Erfindung weist ein Polarisationssystem folgende Merkmale auf: ein erstes Substrat aus einem ersten Substratmaterial mit einem darauf aufgebrachten ersten Schichtsystem und zumindest ein in einem durch eine Strahlquelle gebildeten Strahlengang nachfolgendes zweites Substrat aus einem zweiten Substratmaterial mit einem darauf aufgebrachten zweiten Schichtsystem, wobei das erste und zweite Schichtsystem einen auf dem Substrat aufgebrachten ersten Stapel und einen auf dem ersten Stapel aufgebrachten zweiten Stapel umfassen, wobei der erste Stapel eine alternierende Reihenfolge von hoch- und niedrigbrechenden oxidischen Schichten umfasst, wobei der zweite Stapel eine alternierende Reihenfolge von hoch- und niedrigbrechenden fluoridischen Schichten umfasst, wobei das erste Schichtsystem einen den Strahlengang bildenden unpolarisierten Strahl, der in einem Winkel Φ, der größer als der Brewsterwinkel für das eingesetzte Substratmaterial ist, auf das Schichtsystem trifft, in eine erste das Substrat transmittierende und größtenteils polarisierte erste Komponente und zumindest in eine an dem Schichtsystem reflektierte und größtenteils polarisierte zweite Komponente teilt, wobei das erste Schichtsystem in seiner Anzahl an oxidischen und fluoridischen Schichten derart ausgelegt ist, dass der Anteil der reflektierten und polarisierten zweiten Komponente zumindest 90% beträgt, wobei das zweite Schichtsystem einen den Strahlengang bildenden Strahl, der einen Anteil der größtenteils polarisierten zweiten Komponente von zumindest 90% aufweist und auf das Schichtsystem trifft, in eine erste das Substrat transmittierende und größtenteils polarisierte erste Komponente und zumindest eine an dem zweiten Schichtsystem reflektierte und größtenteils polarisierte zweite Komponente teilt, wobei der Anteil der größtenteils polarisierten zweiten Komponente nach dem zweiten Schichtsystem größer ist als nach dem ersten Schichtsystem.

Die Erfindung macht sich damit die Erkenntnis zu Nutze, dass nicht die mit hohen Verlusten behaftete und durch das Substrat transmittierende polarisierte Komponente für die weitere Strahlführung verwendet wird, sondern die am Schichtsystem reflektierte polarisierte Komponente, wobei das System hierfür für große Eintrittswinkel größer als der Brewsterwinkel abgestimmt wird.

Noch günstiger ist es in einer bevorzugten Ausführungsform dabei, wenn der Anteil der reflektierten und polarisierten zweiten Komponente zumindest 95 %, bevorzugt 99 % beträgt.

In einer weiteren bevorzugten Ausführungsform ist der Strahl, der auf das zweite Schichtsystem trifft, ebenfalls größer als der Brewsterwinkel für das eingesetzte Substratmaterial.

In einer weiteren bevorzugten Ausführungsform sind im Strahlengang nachfolgend ein drittes Substrat aus einem dritten Substratmaterial und ein viertes Substrat aus einem vierten Substratmaterial mit jeweiligen dritten und vierten Schichtsystemen angeordnet, wobei das dritte und vierte Schichtsystem einen auf dem Substrat aufgebrachten ersten Stapel und einen auf dem ersten Stapel aufgebrachten zweiten Stapel umfassen, wobei der erste Stapel eine alternierende Reihenfolge von hoch- und niedrigbrechenden oxidischen Schichten umfasst und der zweite Stapel eine alternierende Reihenfolge von hoch- und niedrigbrechenden fluoridischen Schichten umfasst. Durch die Bereitstellung weiterer Substrate mit jeweiligen aufgebrachten Schichtsystemen kann der Polarisationsgrad der an den Schichtsystemen reflektierten zweiten Komponente weiter erhöht werden. Bevorzugt ist auch der Strahl der auf das dritte und vierte Schichtsystem trifft größer als der Brewsterwinkel für das eingesetzte Substratmaterial.

In einer weiteren bevorzugten Ausführungsform sind die mindestens zwei Substrate derart angeordnet, dass ein einfallender Strahl des Strahlenganges parallel zu einem ausfallenden Strahlengang ist. Durch eine derartige Ausführungsform ist ein derartiges Polarisationssystem als Subsystem besonders einfach in größere Systeme einbaubar.

Gemäß der Erfindung sind die eingesetzten Substratmaterialien Quarzglas und Kalziumfluorid, wobei das erste Substratmaterial Kalziumfluorid und jedes weitere Substratmaterial Quarzglas ist. Insbesondere durch eine Kombination der Substratmaterialen kann der Kostenaufwand minimiert werden, indem bei Hochenergieanwendungen, also bei verwendeten Wellenlängen der Strahlung unterhalb von 250 nm, lediglich das erste Substrat aus Kalziumfluorid besteht, während die anderen Substraten aus dem billigeren Substratmaterial Quarzglas aufgebaut sind.

In einer weiteren bevorzugten Ausführungsform werden als oxidische Schichten hochbrechendes Aluminiumoxid und niedrigbrechendes Siliziumoxid verwendet. In einer weiteren bevorzugten Ausführungsform werden als fluoridische Schichten hochbrechendes Lanthanfluorid, Gadoliniumfluorid oder Neodymfluorid sowie niedrigbrechendes Magnesiumfluorid, Aluminiumfluorid, Kryolith oder Chiolith verwendet.

In einer weiteren bevorzugten Ausführungsform beträgt die Summe der Anzahl der Schichten des ersten Stapels und zweiten Stapels größer 40, bevorzugt größer 60.

Gemäß der Erfindung ist das Polarisationssystem für Wellenlängenbereiche zwischen 170 und 230 nm ausgelegt. Dies bedeutet, dass die optische Dicke der jeweiligen Schichtpakete ein Viertel der Anwendungswellenlänge beträgt, wobei die Dicke ferner mit einem Korrekturfaktor K an den Einfallswinkel so angepasst werden muss, das eine optimale Polarisationswirkung entsteht und der Polarisationsbereich durch spezielle Glättungsschichten verbreitert wird.

Es versteht sich, dass die eben beschriebenen Ausführungsformen in Alleinstellung oder in Kombination untereinander dargestellt werden können. Umfasst eine bevorzugte Ausführungsform eine "und/ oder"-Verknüpfung zwischen einem ersten Merkmal und einem zweiten Merkmal, so ist dies so zu lesen, dass die Ausführungsform sowohl das erste Merkmal als auch das zweite Merkmal und gemäß einer weiteren Ausführungsform entweder nur das erste Merkmal oder nur das zweite Merkmal aufweist.

Vorteilhafte Ausführungsbeispiele der vorliegenden Erfindung werden nachfolgend Bezug nehmend auf die Figuren näher erläutert. Es zeigen:

Fig. 1    Schematischer Aufbau eines erfindungsgemäßen Polarisationssystems;

Fig. 2    Schematischer Aufbau eines erfindungsgemäßen Schichtsystems auf einem Substrat für ein erfindungsgemäßes Polarisationssystem;

Fig. 3    Darstellung der an dem erfindungsgemäßen Schichtsystem reflektierten und durch das Schichtsystem transmittierten Strahlung;

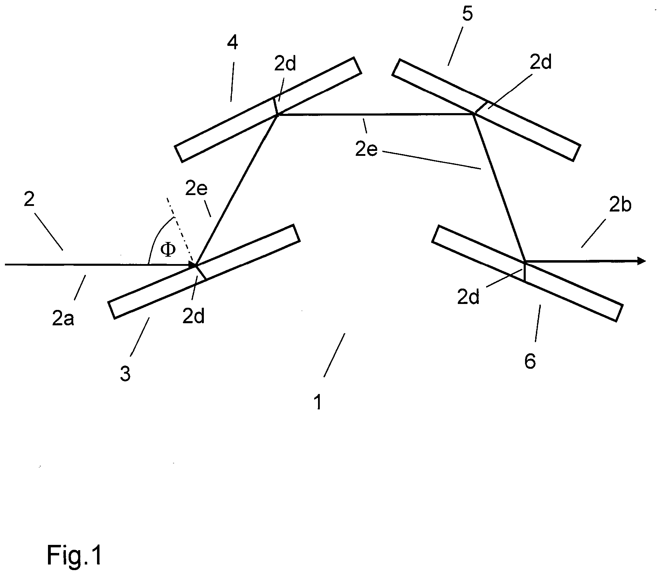

Fig.1 zeigt in einer schematischen Ansicht den Aufbau eines erfindungsgemäßen Polarisationssystems 1. Das System wird durch eine nicht näher dargestellte Strahlquelle, beispielsweise eine Laserquelle, beispielsweise mit einer Wellenlänge von 193 nm, gespeist.

Die Laserquelle sendet eine unzureichend polarisierte Strahlung aus, die einen Strahlengang 2 bildet.

Die unpolarisierte Strahlung weist eine sogenannte P polarisierte Komponente, die erfindungsgemäß als erste Komponente 2d und eine sogenannte S polarisierte Komponente, die erfindungsgemäß als zweite Komponente 2e bezeichnet wird, auf. Diese Strahlung trifft in einem Winkel Φ (Der Winkel Φ ist definiert als der Winkel zwischen der eintretenden Strahlung und der Flächennormalen einer Substratebene), der größer als der Brewsterwinkel für die eingesetzten Substratmaterialien ist, auf das erste Substrat 3 beziehungsweise Schichtsystem 3a auf.

Das Polarisationssystem 1 weist insgesamt vier Substrate 3, 4, 5 und 6 auf, auf denen jeweils ein dielektrisches Schichtsystem 3a, 4a, 5a und 6a abgeschieden ist. Das Schichtsystem, auf dessen Aufbau später noch genauer eingegangen werden soll, hat die Aufgabe, lediglich einen geringen Anteil der ersten Komponente 2d zu reflektieren, so dass ein Großteil dieser Komponente durch das jeweilige Substrat transmittiert wird. Im Gegenzug ist das Schichtsystem derart ausgebildet, dass ein Großteil der zweiten Komponente 2e am Schichtsystem reflektiert wird. Bevorzugt weist der Strahlengang 2 nach dem zweiten Substrat zumindest noch 90 %, besonders bevorzugt mindestens 99 % der zweiten Komponente 2e auf. Mit wachsender Anzahl an Substraten und entsprechenden Schichtsystemen kann eine immer bessere Polarisationswirkung bei nur unwesentlicher Verringerung des Durchlasses der zweiten Komponente erreicht werden. Durch ein Polarisationssystem mit insgesamt vier Substraten kann somit der Anteil der zweiten Komponente im Verhältnis zum Anteil der ersten Komponente weiter gesteigert werden.

Die vier Substrate sind derart angeordnet, dass ein einfallender Strahl 2a des Strahlenganges 2 parallel zu einem ausfallenden Strahlengang 2b ist. Somit ist es möglich, das Polarisationssystem 1 relativ einfach als Subsystem in weitere Systeme, beispielsweise in ein Photolithographiesystem einzubauen.

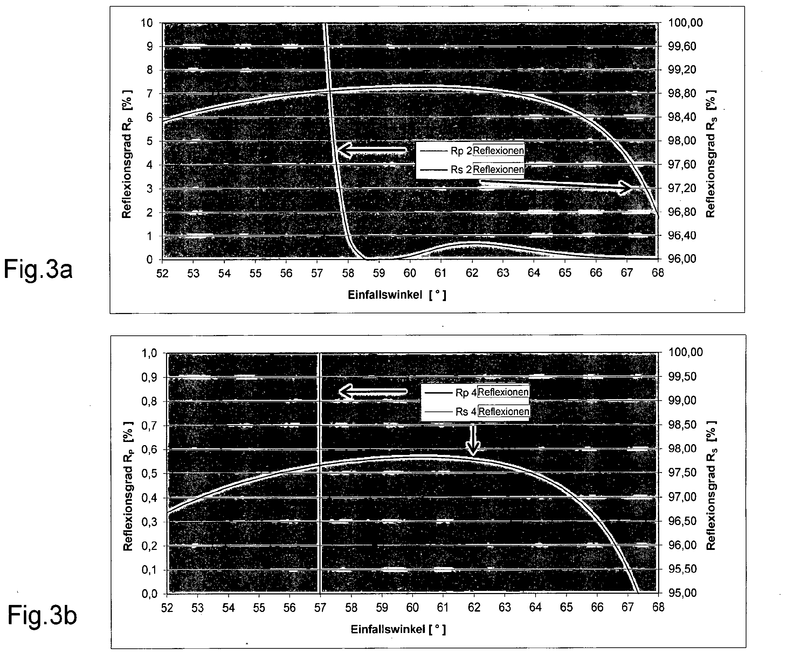

Die Fig. 3a und Fig. 3b zeigen ein Ausführungsbeispiel, wobei Fig. 3a die Reflexionszustände in Abhängigkeit des Einfallswinkels $\Phi$ nach dem zweiten Substrat und Fig. 3b die Reflexionszustände in Abhängigkeit des Einfallswinkels $\Phi$ nach dem vierten Substrat abbildet. Wie den beiden Figuren zu entnehmen ist, kann der Anteil der ersten Komponente 2d (P Komponente oder $R_P$) am reflektierten Strahl quasi auf 0 reduziert werden, während der Anteil der zweiten Komponente 2e am reflektierten Strahl immer noch weit über 90 % beträgt.

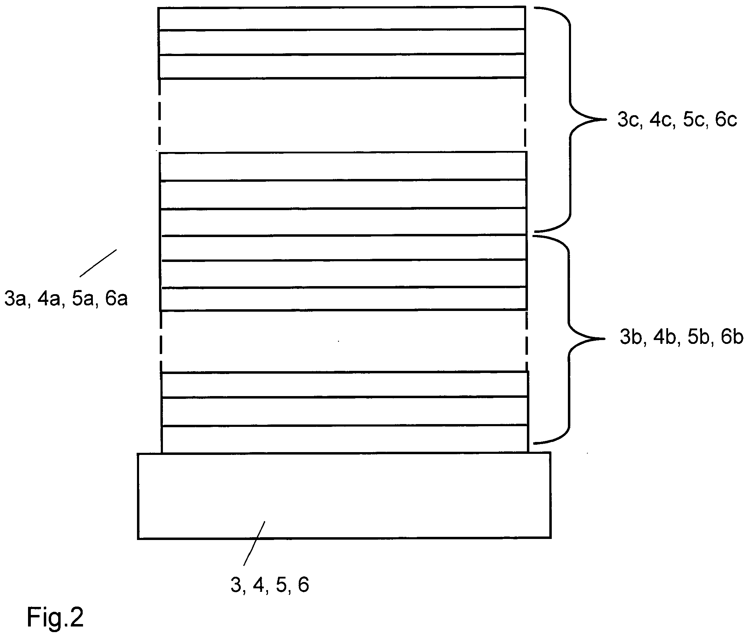

Fig. 2 zeigt nun den Aufbau eines erfindungsgemäßen Schichtsystems. Das hochreflektierende Schichtsystem 3a, 4a, 5a und 6a umfasst erfindungsgemäß einen ersten Stapel 3b, 4b, 5b und 6b aus oxidischen Schichten, der auf dem Substrat aufgebracht wurde und einen zweiten Stapel 3c, 4c, 5c und 6c aus fluoridischen Schichten, der auf dem ersten Stapel aufgebracht wurde. Sowohl der erste Stapel als auch der zweite Stapel weisen eine alternierende Reihenfolge von hoch- und niedrigbrechenden Einzelschichten auf. Als oxidische Materialien dienen in diesem Ausführungsbeispiel hochbrechendes Aluminiumoxid und niedrigbrechendes Siliziumoxid, während als fluoridische Materialien hochbrechendes Lanthanfluorid oder Gadoliniumfluorid sowie niedrigbrechendes Magnesiumfluorid oder Aluminiumfluorid verwendet wird.

In dem Ausführungsbeispiel gemäß den Fig. 3a und Fig. 3b wurde als weiteres hochbrechendes Fluorid Neodymfluorid verwendet.

insgesamt wird somit durch die erfindungsgemäße Lösung ein Polarisationssystem mit einem hohen Anteil der reflektierten und polarisierten Komponente bereitgestellt, welches beispielsweise in einem Photolithographiesystem eingesetzt werden kann.

## Patentansprüche

1. Polarisationssystem (1) für Wellenlängenbereiche zwischen 170 und 230 nm aufweisend folgende Merkmale:

- ein erstes Substrat (3) aus einem ersten Substratmaterial mit einem darauf aufgebrachten ersten Schichtsystem (3a) und zumindest ein in einem durch eine Strahlquelle gebildeten Strahlengang (2) nachfolgendes zweites Substrat (4) aus einem zweiten Substratmaterial mit einem darauf aufgebrachten zweiten Schichtsystem (4a);
- wobei das erste und zweite Schichtsystem einen auf dem Substrat aufgebrachten ersten Stapel (3b, 4b) und einen auf dem ersten Stapel unmittelbar aufgebrachten zweiten Stapel (3c, 4c) umfassen;
- wobei der erste Stapel eine alternierende Reihenfolge von hoch- und niedrigbrechenden oxidischen Schichten umfasst;
- wobei der zweite Stapel eine alternierende Reihenfolge von hoch- und niedrigbrechenden fluoridischen Schichten umfasst;
- wobei das erste Schichtsystem (3a) einen den Strahlengang (2) bildenden unpolarisierten Strahl (2a), der in einem Winkel $\Phi$, der größer als der Brewsterwinkel für das eingesetzte Substratmaterial ist, auf das Schichtsystem (3a) trifft, in einen das Substrat transmittierenden ersten Teilstrahl, wobei der erste Teilstrahl größtenteils eine P-polarisierte erste Komponente umfasst und zumindest in einen an dem Schichtsystem (3a) reflektierten zweiten Teilstrahl teilt, wobei der zweite Teilstrahl größtenteils eine S-polarisierte zweite Komponente (2e) umfasst;
- wobei das erste Schichtsystem (3a) in seiner Anzahl an oxidischen und fluoridischen Schichten derart ausgelegt ist, dass der Anteil der reflektierten und S-polarisierten zweiten Komponente (2e) zumindest 90% am zweiten Teilstrahl beträgt;

wobei das zweite Schichtsystem (4a) den zweiten Teilstrahl, der einen Anteil der S-polarisierten zweiten Komponente (2e) von zumindest 90% aufweist und auf das Schichtsystem trifft, in einen das Substrat transmittierenden dritten Teilstrahl, wobei der dritte Teilstrahl größtenteils die P-polarisierte erste Komponente (2d) umfasst und zumindest in einen an dem zweiten Schichtsystem (4a) reflektierten vierten Teilstrahl teilt, wobei der vierte Teilstrahl größtenteils die S-polarisierte zweite Komponente (2e) umfasst

, wobei der Anteil der S-polarisierten zweiten Komponente im vierten Teilstrahl nach dem zweiten Schichtsystem größer ist als der Anteil der S-polarisierten zweiten Komponente im zweiten Teilstrahl nach dem ersten Schichtsystem, wobei die eingesetzten Substratmaterialien Quarzglas und Kalziumfluorid sind, wobei das erste Substratmaterial Kalziumfluorid ist und jedes weitere Substratmaterial Quarzglas ist.

2. Polarisationssystem (1) nach Anspruch 1, **dadurch gekennzeichnet, dass** der Anteil der reflektierten und S-polarisierten zweiten Komponente (2e) zumindest 95%, bevorzugt 99% beträgt.

3. Polarisationssystem (1) nach Anspruch 1 oder 2, **dadurch gekennzeichnet, dass** der Strahl, der auf das zweite Schichtsystem trifft, ebenfalls größer als der Brewsterwinkel für das eingesetzte Substratmaterial ist.

4. Polarisationssystem (1) nach einem der vorhergehenden Ansprüche, **dadurch gekennzeichnet, dass** im Strahlengang nachfolgend ein drittes Substrat (5) aus einem dritten Substratmaterial und ein viertes Substrat (6) aus einem vierten Substratmaterial mit jeweiligen dritten (5a) und vierten Schichtsystemen (6a) angeordnet sind, wobei das dritte und vierte Schichtsystem einen auf dem Substrat aufgebrachten ersten Stapel (5b, 6b) und einen auf dem ersten Stapel aufgebrachten zweiten Stapel (5c, 6c) umfassen, wobei der erste Stapel eine alternierende Reihenfolge von hoch- und niedrigbrechenden oxidischen Schichten umfasst und der zweite Stapel eine alternierende Reihenfolge von hoch- und niedrigbrechenden fluoridischen Schichten umfasst.

5. Polarisationssystem (1) nach einem der vorhergehenden Ansprüche, **dadurch gekennzeichnet, dass** die mindestens zwei Substrate derart angeordnet sind, dass ein einfallender Strahl (2a) des Strahlenganges (2) parallel zu einem ausfallenden Strahlengang (2b) ist.

6. Polarisationssystem (1) nach einem der vorhergehenden Ansprüche, **dadurch gekennzeichnet, dass** als oxidische Schichten hochbrechendes Aluminiumoxid und niedrigbrechendes Siliziumoxid verwendet wird.

7. Polarisationssystem (1) nach einem der vorhergehenden Ansprüche, **dadurch gekennzeichnet, dass** als fluoridische Schichten hochbrechendes Lanthanfluorid, Gadoliniumfluorid oder Neodymfluorid sowie niedrigbrechendes Magnesiumfluorid, Aluminiumfluorid, Kryolith oder Chiolith verwendet wird.

8. Polarisationssystem (1) nach einem der vorhergehenden Ansprüche, **dadurch gekennzeichnet, dass** die Summe der Anzahl der Schichten des ersten Stapels und zweiten Stapels größer 40, bevorzugt größer 60 beträgt.

**Claims**

1. Polarization system (1) for wavelength ranges between 170 and 230 nm, comprising the following features:

   - a first substrate (3) made of a first substrate material having a first layer system (3a) applied thereto, and at least one second substrate (4), which is subsequent in a beam path (2) formed by a beam source, made of a second substrate material having a second layer system (4a) applied thereto;
   - wherein the first and second layer system comprise a first stack (3b, 4b) applied to the substrate and a second stack (3c, 4c) applied directly to the first stack;
   - wherein the first stack comprises an alternating sequence of high- and low-refractive-index oxidic layers;
   - wherein the second stack comprises an alternating sequence of high- and low-refractive-index fluoridic layers;
   - wherein the first layer system (3a) an unpolarized beam (2a) forming the beam path (2), which beam, in a first partial beam transmitting the substrate, impinges on the layer system (3a) at an angle Φ which is greater than the Brewster angle for the substrate material used, wherein the first partial beam largely comprises a P-polarized first component and divides at least into a second partial beam reflected by the layer system (3a), wherein the second partial beam largely comprises an S-polarized second component (2e);
   - wherein the first layer system (3a) is designed with regard to its number of oxidic and fluoridic layers such that the proportion of the reflected and S-polarized second component (2e) is at least 90% of the second partial beam;
   wherein the second layer system (4a) the second partial beam, which has a proportion of the largely S-polarized second component (2e) of at least 90% and, in a third partial beam transmitting the substrate, impinges on the layer system, wherein the third partial beam largely comprises the P-polarized first component (2d) and divides at least into a fourth partial beam reflected by the second layer system (4a), wherein the fourth partial beam largely comprises the S-polarized second component (2e),
   wherein the proportion of the largely S-polarized second component in the fourth partial beam after the second layer system is greater than the proportion of the largely S-polarized second component in the second partial beam after the first layer system, wherein the substrate materials used are quartz glass and calcium fluoride, wherein the first substrate material is calcium fluoride and each further substrate material is quartz glass.

2. Polarization system (1) according to claim 1, **characterized in that** the proportion of the reflected and S-polarized second component (2e) is at least 95%, preferably 99%.

3. Polarization system (1) according to claim 1 or 2, **characterized in that** the beam which impinges on the second layer system is also greater than the Brewster angle for the substrate material used.

4. Polarization system (1) according to any of the preceding claims, **characterized in that** a third substrate (5) made of a third substrate material and a fourth substrate (6) made of a fourth substrate material having corresponding third (5a) and fourth layer systems (6a) are subsequently arranged in the beam path, the third and fourth layer system comprising a first stack (5b, 6b) applied to the substrate and a second stack (5c, 6c) applied to the first stack, the first stack comprising an alternating sequence of high- and low-refractive-index oxidic layers, and the second stack comprising an alternating sequence of high- and low-refractive-index fluoridic layers.

5. Polarization system (1) according to any of the preceding claims, **characterized in that,** the at least two substrates are arranged such that an incident beam (2a) of the beam path (2) is parallel to an emergent beam path (2b).

6. Polarization system (1) according to any of the preceding claims, **characterized in that** high-refractive-index aluminum oxide and low-refractive-index silicon oxide are used as oxidic layers.

7. Polarization system (1) according to any of the preceding claims,
**characterized in that** high-refractive-index lanthanum fluoride, gadolinium fluoride or neodymium fluoride, and low-refractive-index magnesium fluoride, aluminum fluoride, cryolite or chiolite are used as fluoridic layers.

8. Polarization system (1) according to any of the preceding claims,
**characterized in that** the sum of the number of layers of the first stack and the second stack is greater than 40, preferably greater than 60.

## Revendications

1. Système de polarisation (1) pour des plages de longueurs d'onde entre 170 et 230 nm, présentant les caractéristiques suivantes :

- un premier substrat (3) réalisé en un premier matériau de substrat comportant un premier système de couches (3a) déposé sur celui-ci et au moins un second substrat (4) subséquent dans un trajet de faisceau (2) formé par une source de faisceau, lequel second substrat est réalisé en un second matériau de substrat comportant un second système de couches (4a) déposé sur celui-ci ;
- dans lequel le premier et le second système de couches comprennent un premier empilement (3b, 4b) déposé sur le substrat et un second empilement (3c, 4c) déposé directement sur le premier empilement ;
- dans lequel le premier empilement comprend un ordre alterné de couches formées par oxydation fortement et faiblement réfringentes ;
- dans lequel le second empilement comprend un ordre alterné de couches formées par fluoration fortement et faiblement réfringentes ;
- dans lequel le premier système de couches (3a) divise un faisceau (2a) non polarisé formant le trajet de faisceau (2), lequel trajet rejoint le système de couches (3a) selon un angle Φ supérieur à l'angle de Brewster pour le matériau de substrat utilisé, en un premier faisceau partiel de transmission du substrat, dans lequel le premier faisceau partiel comprend en grande partie un premier composant polarisé P et au moins en un deuxième faisceau partiel réfléchi au niveau du système de couches (3a), dans lequel le deuxième faisceau partiel comprend en grande partie un second composant (2e) polarisé S ;
- dans lequel le premier système de couches (3a) est constitué en son nombre de couches formées par oxydation et par fluoration, de telle sorte que la proportion du second composant (2e) réfléchi et polarisé S est d'au moins 90 % sur le second faisceau partiel ;
dans lequel le second système de couches (4a) divise le second faisceau partiel, qui présente une proportion du second composant (2e) polarisé S d'au moins 90 %, et rejoint le système de couches, en un troisième faisceau partiel de transmission du substrat, dans lequel le troisième faisceau partiel comprend en grande partie le premier composant (2d) polarisé P et au moins en un quatrième faisceau partiel réfléchi au niveau du second de système de couches (4a), dans lequel le quatrième faisceau partiel comprend en grande partie le second composant (2e) polarisé S,
dans lequel la proportion du second composant polarisé S dans le quatrième faisceau partiel après le second système de couches est supérieure à la proportion du second composant polarisé S dans le second faisceau partiel après le premier système de couches, dans lequel les matériaux de substrat utilisés sont le verre de quartz et le fluorure de calcium, dans lequel le premier matériau de substrat est le fluorure de calcium et chaque matériau de substrat supplémentaire est le verre de quartz.

2. Système de polarisation (1) selon la revendication 1, **caractérisé en ce que** la proportion du second composant (2e) réfléchi et polarisé S est d'au moins 95 %, préférablement de 99 %.

3. Système de polarisation (1) selon la revendication 1 ou 2,
**caractérisé en ce que** le faisceau, qui rejoint le second système de couches, est également plus grand que l'angle de Brewster pour le matériau de substrat utilisé.

4. Système de polarisation (1) selon l'une des revendications précédentes,
**caractérisé en ce que,** dans le trajet de faisceau, un troisième substrat (5) réalisé en un troisième matériau de substrat et un quatrième substrat (6) réalisé en un quatrième matériau de substrat comportant des troisièmes (5a) et quatrièmes systèmes de couches (6a) respectifs sont ensuite agencés, dans lequel les troisième et quatrième systèmes de couches comprennent un premier empilement (5b, 6b) déposé sur le substrat et un second empilement (5c, 6c) déposé sur le premier empilement, dans lequel le premier empilement comprend un ordre alterné de couches formées par oxydation fortement et faiblement réfringentes et le second empilement comprend un ordre alterné de couches formées par fluoration fortement et faiblement réfringentes.

5. Système de polarisation (1) selon l'une des revendications précédentes, **caractérisé en ce que** les au moins deux substrats sont agencés de telle sorte qu'un faisceau (2a) incident du trajet de faisceau (2) est parallèle à un trajet de faisceau (2b) émergent.

6. Système de polarisation (1) selon l'une des revendications précédentes, **caractérisé en ce que** l'oxyde d'aluminium fortement réfringent et l'oxyde de silicium faiblement réfringent sont utilisés comme couches formées par oxydation.

7. Système de polarisation (1) selon l'une des revendications précédentes, **caractérisé en ce que** le fluorure de lanthane, fluorure de gadolinium ou fluorure néodyme fortement réfringents ainsi que le fluorure de magnésium, fluorure d'aluminium, cryolite ou chiolithe faiblement réfringents sont utilisés comme couches formées par fluoration.

8. Système de polarisation (1) selon l'une des revendications précédentes, **caractérisé en ce que** la somme du nombre des couches du premier empilement et du second empilement est supérieure à 40, préférablement supérieure à 60.

Fig.1

Fig.2

Fig.3a

Fig.3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060050370 A